# EUROPEAN PATENT APPLICATION

(11) **EP 2 213 877 A2**
(43) Date of publication of application: **04.08.2010**
(21) Application number: 10152124.3
(22) Date of filing: 29.01.2010
(51) Int. Cl.: F03D 11/00

(54) **Wind turbine having a Nacelle with cooler top**

(30) Priority: 30.01.2009 DK 200900146
(71) Applicant: Vestas Wind Systems A/S, 8940 Randers - SV (DK)
(72) Inventor: Mortensen, Henning, 8960 Randers SØ (DK)
(74) Representative: Hoffmann Dragsted

(57) **Abstract**

The present invention relates to a wind turbine nacelle having a front end at which rotor blades are arranged and a longitudinal extension. The wind flows from the front end along the longitudinal extension defining a wind direction. The nacelle comprises a first face, and a cooling device comprising a cooling area and extends from the first face of the nacelle. The nacelle has at least one side with at least one opening for venting of air comprised within the nacelle. The nacelle further comprises an obstruction situated before the openings in relation to the wind direction in order to create a turbulent airflow outside the openings so that the nacelle is vented by dragging air out of the opening.

## Description

### Field of the Invention

The present invention relates to a wind turbine nacelle having a longitudinal extension. The nacelle comprises a first face, a front facing a plurality of rotor blades, and a cooling device extending from the first face and having at least one side with at least one opening for venting of air comprised inside the nacelle. The side of the cooling device has a side length extending along the longitudinal extension of the nacelle and a side width.

### Background Art

A wind turbine converts wind power into electrical energy by using a generator placed among other equipment in the nacelle of the wind turbine. When the generator converts energy, the air surrounding the equipment is heated and the equipment itself is thus heated, too.

When the equipment is heated, the efficiency with which the conversion occurs is substantially decreased. In order to cool the equipment, the heated air surrounding the equipment is vented, allowing cooler air from the outside to enter the wind turbine nacelle and cool the equipment.

For this purpose, a cooling device is placed on top of the nacelle for venting of heated air comprised inside the nacelle. However, in order for the cooling device to function properly, a pump is situated within the nacelle for pumping the heated air out through openings in the cooling device.

### Summary of the Invention

It is an object of the present invention to wholly or partly overcome the above disadvantages and drawbacks of the prior art. More specifically, it is an object to provide an improved wind turbine nacelle which is able to cool the generator and other equipment inside the nacelle more efficiently than the solutions of prior art.

Furthermore, it is an object to vent the heated air within the inside of wind turbine nacelle to the outside without using a pump.

The above objects, together with numerous other objects, advantages, and features, which will become evident from the below description, are accomplished by a solution in accordance with the present invention by a wind turbine nacelle having a front end at which rotor blades are arranged and a longitudinal extension, where wind flows from the front end along the longitudinal extension defining a wind direction, the nacelle comprising a first face and a cooling device comprising a cooling area and extending from the first face of the nacelle, wherein the nacelle has at least one side with at least one opening for venting of air comprised within the nacelle, the side having a side length extending along the longitudinal extension of the nacelle and a side width, and wherein the nacelle further comprises an obstruction situated before the openings in relation to the wind direction in order to create a turbulent airflow outside the openings so that the nacelle is vented by dragging air out of the opening.

The obstruction increases the venting of air substantially, since the wind flowing along the side of the cooling device is diverted away from the side, resulting in a dragging force behind the obstruction and thus outside the opening in the side of the nacelle.

Hereby, an alternative solution for improving the cooling of a wind turbine nacelle is obtained, and without the use of a pump. Thus, not only is a more efficient wind turbine obtained, but also a wind turbine which does not use some of the produced electricity to drive such a pump.

In one embodiment, the first face of the wind turbine nacelle may be a top face of the wind turbine nacelle.

In another embodiment, the first face may be the side of the nacelle and the cooling device comprises a cover fastened to the nacelle, the cover extending perpendicular to the longitudinal extension of the nacelle and partly along the nacelle creating a space between the nacelle and the cover, and wherein the obstruction is the cover arranged outside the at least one opening.

Moreover, the cover may have a front and the space may be partly blocked at the front, thus blocking the wind from entering the space.

In addition, the at least on opening may be arranged in a side of the cooling device.

In one embodiment, the cooling device comprises a cooling area wherein the at least one opening is positioned after the cooling area in relation to the wind direction for venting of air comprised within the nacelle.

In another embodiment, the opening in side of the cooling device may extend substantially along the width of the side, and the obstruction may have an extension corresponding to the extension of at least one opening along the width of the side so as to create a turbulent airflow along the whole extension of the opening.

An optimal drag over the entire extension of the opening is thus obtained, since the resulting dragging force works over the whole opening.

In addition, at least a part of the obstruction may constitute a part of the side of the cooling device and project from the side at a first distance measured perpendicular to the side.

When the obstruction constitutes a part of the side of the cooling device, a smooth transition between the obstruction and side of the cooling device is obtained. Thus, the smooth, aesthetic appearance of the wind turbine is upheld. Furthermore, when the obstruction is not fastened on the outside of the cooling device, dust does not settle on such a fastening.

Moreover, the obstruction may have a flap which is fastened to the side of the cooling device and projects out from the side of the cooling device.

A flap may easily be fastened to the side of the cooling device, and is not very costly to manufacture. Furthermore, the obstruction may easily be fastened to a nacelle on an already installed wind turbine.

In another embodiment of the invention, the obstruction may be shaped at least partly as a duct.

In this case, the obstruction can be used for other purposes than for creating turbulent air outside the opening. One purpose could be to transport heated air from within the generator situated within the nacelle.

In one embodiment, a cross-sectional shape of the obstruction may be oval, round, partly round, triangular, or trapeze-like.

When the obstruction has an oval, round, partly round, triangular, or trapeze-like cross-section, the wind can flow smoothly past the obstruction, creating a more efficient drag on the back side of the obstruction.

Furthermore, when having an oval cross-section the inside of the obstruction is more concave which increases the drag inside the obstruction, such in the duct or vent pipe.

In one embodiment, the side of the cooling device having the opening may be a first face of the cooling device.

In another embodiment, the side of the cooling device may extend substantially perpendicular to the first face of the nacelle.

Moreover, the side of the cooling device may have a plurality of openings.

When the side of the cooling device has a plurality of openings instead of just one opening, the construction of the cooling device is improved.

In one embodiment, wherein the obstruction may be positioned on the side of the cooling device so that a second distance from the peak point of obstruction to the opening corresponding to 1/2 of the length of the side of the cooling device, preferably 1/3 of the length of the side of the cooling device, more preferably 1/4 of the length of the side of the cooling device. Hereby, the drag outside the opening is optimised.

In one embodiment, the connection may be in the form of a mounting or a bracket.

By using mountings or brackets, it is also possible easily to attach obstructions having the above-mentioned cross-sections to a nacelle on an already installed wind turbine.

In another embodiment, the obstruction may extend along the whole width of the side of the cooling device.

Moreover, the obstruction may be a vent pipe in fluid connection with a certain area within the nacelle or a housing within the nacelle, e.g. the area directly around the generator.

Hereby, the obstruction can be used for venting out air directly from a particular place inside the nacelle.

In addition, the wind turbine nacelle may further comprise a cover having at least one inner face, the cooling device being enclosed by the first face of the nacelle and the inner face of the cover.

Finally, the invention also relates to a wind turbine comprising a wind turbine nacelle as described above.

### Brief Description of the Drawings

The invention and its many advantages will be described in more detail below with reference to the accompanying schematic drawings, which for the purpose of illustration show some non-limiting embodiments and in which
Fig. 1 shows a wind turbine having a nacelle according to the present invention,
Fig. 2 shows a sectional view of a another embodiment of the wind turbine nacelle according to the invention,
Fig. 3 shows a sectional view of yet another embodiment of the wind turbine nacelle according to the invention,
Fig. 4 shows a sectional view of yet another embodiment of the wind turbine nacelle according to the invention,
Fig. 5 shows a wind turbine nacelle seen from the side, and
Fig. 6 shows a wind turbine nacelle seen from above looking down at the top face.

All the figures are highly schematic and not necessarily to scale, and they show only those parts which are necessary in order to elucidate the invention, other parts being omitted or merely suggested.

### Detailed description of the invention

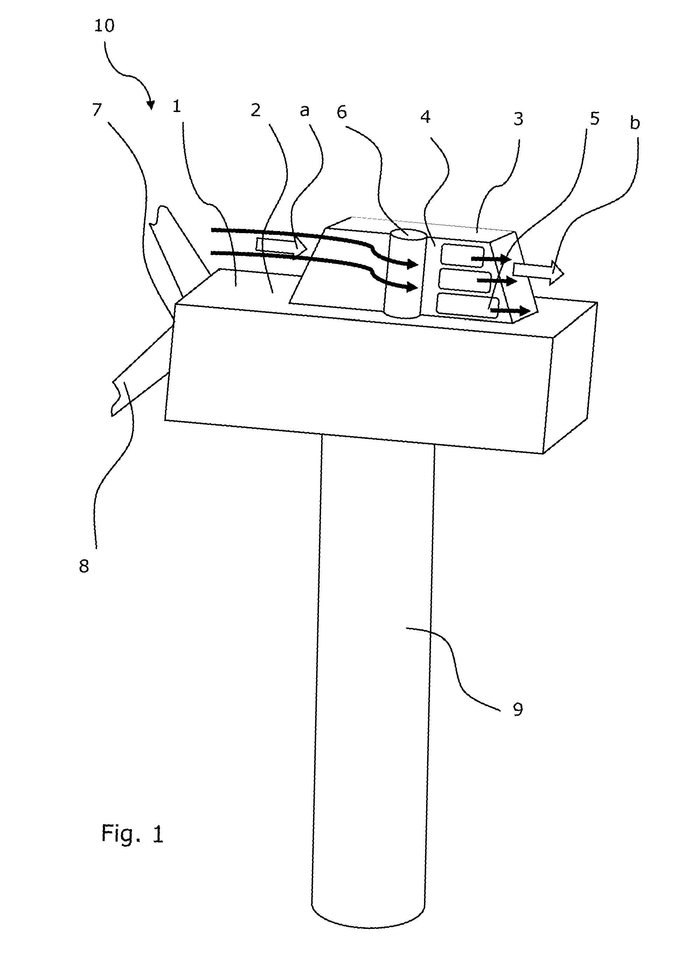

Fig. 1 shows a wind turbine 10 having a nacelle 1 according to the invention. For the purpose of illustration, the nacelle 1 is merely shown as a square box; however, the nacelle is usually more aerodynamic in shape.

The wind turbine nacelle 1 is situated on a tower 9 and has a front 7 facing a plurality of rotor blades 8, normally three blades 8. The wind turbine nacelle 1 houses a generator and other equipment used for driving the conversion process of wind energy to electricity - also called the drive train.

When producing electricity, the drive train produces a lot of heat, resulting in a less effective conversion process. Therefore, the wind turbine nacelle 1 has a cooling device 3 for cooling the drive train by venting the heated air surrounding the drive train to the outside, exchanging it with cooler air from outside the wind turbine nacelle.

The cooling device may comprise a cooling area and may be open at its front so that wind (arrow a) flows in through the front of the cooling device and past the cooling area and the wind (arrow b) flows out at the back of the cooling device. The cooling area may comprise ducts/channels through which the heated air or a cooling fluid flows. Wind flows along the nacelle and through the front of the cooling device and thus the cooling area cools the fluid or the heated air within the cooling area and thus the drive train. Thus, the cooling area functions as a cooling surface exchanging heat with the fluid within the cooling area.

The cooling device 3 extends from a first face 2 of the wind turbine nacelle 1. For the purpose of illustration, the cooling device is merely shown as a trapeze-like box and a parallelogram; however, the cooling device is usually more aerodynamic in shape.

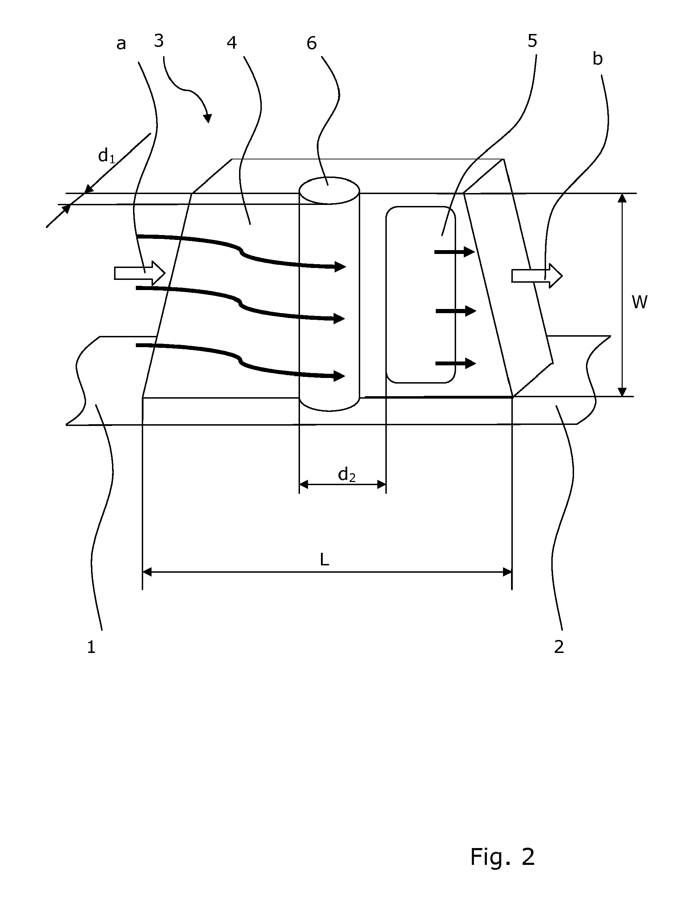

In order to vent the inside of the wind turbine nacelle 1, the cooling device 3 has three openings 5 or just one opening 5 in a side 4 of the cooling device as shown in Fig. 2. The side may have a plurality of openings.

In Fig. 1, the cooling device 3 has an obstruction 6 in the form of a vent pipe having a oval cross-section. The obstruction 6 is positioned upstream from the openings 5 of the cooling device 3 and is thus positioned closer to the rotor blades 8 than the openings. The vent pipe extends from the first face 2 of the wind turbine nacelle along the side of the cooling device 3 to the top of cooling device. The vent pipe projects from the side of the cooling device 3 and is also a part of the side 4. The vent pipe has a fluid communication with an inside of the wind turbine nacelle 1 in order to vent a certain area within the nacelle, e.g. the area directly around the generator.

In the drawings, arrows illustrate the wind flow along the wind turbine nacelle. The fat, hollow arrow a illustrates the wind flowing in through the cooling area of the cooling device, and the fat hollow arrow b illustrates the wind that has flown through the cooling device and entered on the back of the cooling area. The fat, filled arrows illustrate the wind flowing past the obstruction and, due to the obstruction, the wind is forced out of openings in the nacelle or in the cooling device.

Due to the fact that the vent pipe projects from the side 4, the airflow along the side of the cooling device 3 from the rotor blades 8 towards the openings 5 is diverted by the obstruction 6, and a turbulent airflow is created outside the openings. The turbulent airflow creates a suction force outside the openings 5, and air from within the wind turbine nacelle 1 is dragged out through the openings. In order to exchange the heated air within the nacelle 1 with outside air, the cooling device 3 has an inlet situated in front of the cooling device (not shown).

In addition, the inlet may be situated in the side 4 of the cooling device 3 also having the at least one opening 5. The inlet is situated before the obstruction 6, and thus closer to the blades 8 than the obstruction and thus also the openings 5.

According to the invention, the inlet is situated in the front face 7 of the wind turbine nacelle 1.

When increasing the drag outside the openings 5, a pump for pumping out air through the openings is no longer required. Thus, energy is saved in that some of the produced electricity is no longer used for driving the pump.

In Figs. 1-4, the at least one opening is situated after the cooling area so that the drag from the obstruction forces air through the cooling area comprised in the cooling device.

In Figs. 1 and 2, the obstruction 6 is made when making the side 4 of the cooling device 3 in that the side is moulded having such a vent pipe. Thus, the vent pipe is part of the side 4, which makes the transition between the side and the obstruction 6 very smooth. Hereby, dirt comprised in the surrounding air does not settle as easily in the transition between the obstruction 6 and the side 4 of the device 3 as in other solutions where the obstruction is mounted subsequently. Furthermore, the smooth, aesthetic appearance of the wind turbine is upheld.

The obstruction 6 of fig. 2 is also a vent pipe capable of venting air directly from a certain area within the wind turbine nacelle 1. The vent pipe of Fig. 2 has a round cross-section projecting from the side 4 of the cooling device 3 so that the outmost part of the vent pipe has a first distance d₁ from the side of the cooling device when measured in a direction perpendicular to the side of the cooling device. The first distance d, and thus how far the obstruction 6 projects out from the side 4 of the cooling device 3, among other things depend on the position of the obstruction in relation to the openings 5. Thus, the first distance is measured from side of the cooling device to a peak point of the obstruction being the farthest-point of the obnstruction in relation to the side of the cooling device. The position of the obstruction is defined as the position of the peak point. Thus, the first distance d₁ depends on a second distance d₂ measured from the peak point of the obstruction 6 to the opening 5 or the nearest opening 5.

The side 4 of the cooling device 3 having the openings 5 has a lenth L, and the second distance d₂ is in Fig. 2 shown as approximately 1/4 of the length L of the side of the cooling device. Also, the obstruction 6 is connected to the side 4 of the cooling device 3 in a connection and in a second distance d₂ from the opening 5 being 1/2 of the length of the side of the cooling device, or 1/3 of the length of the side of the cooling device.

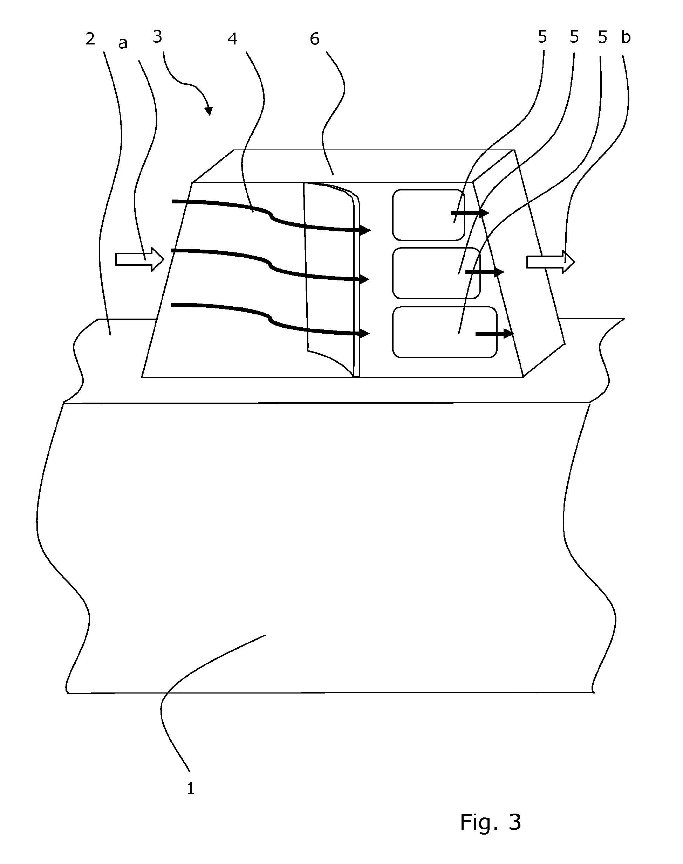

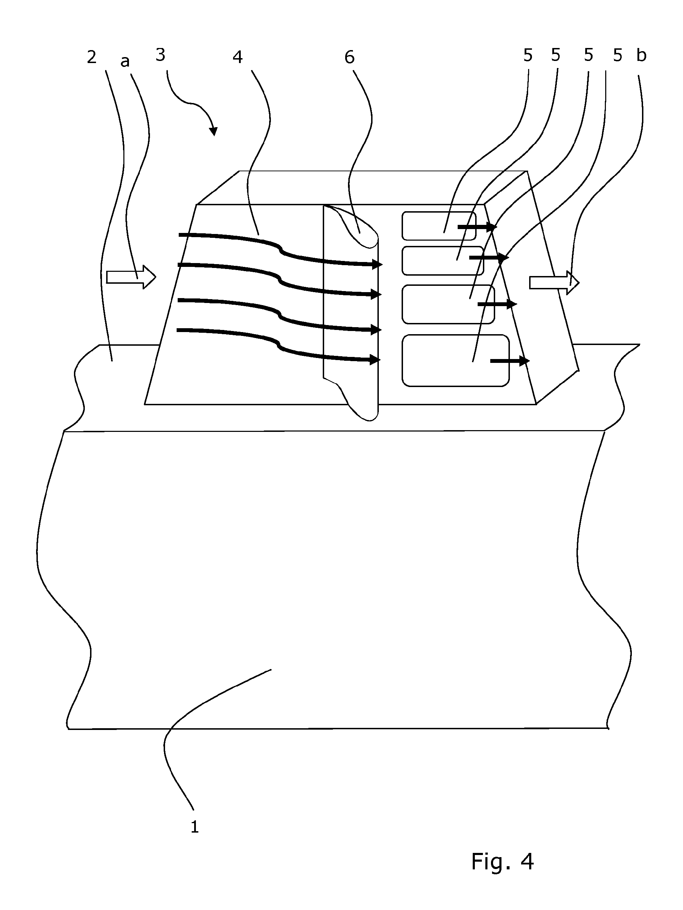

In Fig. 2, the side 4 of the cooling device 3 only has one opening 5. However, the side 4 may also have more openings 5, such as three openings as shown in Fig. 3 or four openings shown in Fig. 4. By having more than one opening 5, the strenght of the side is increased.

Furthermore, the obstruction can have have a variaty of cross-sectional shapes, such as a partly round, triangular, or trapeze-like shape. When having a partly round shape having a straight side, the obstruction 6 is easily fastened to the side 4 of the cooling device 3 in that the straight side is positioned to abut the side of the cooling device.

In addition, the obstruction 6 can have a variaty of shapes and may e.g. be in the form of a flap as shown in Fig. 3. A flap is easily fastened to the side 4 of the cooling device 3 and is not very costly to manufacture. Furthermore, the obstruction 6 is also easily fastened to the cooling device 3 on an already installed wind turbine. In this way, the efficiency of already installed wind turbines can be improved.

The flap is substantially rigid and is typically formed from a rigid plate. The flap may also be moulded onto the side 4 of the cooling device 3 when moulding the cooling device.

In addition, the obstruction 6 may be shaped like a rotor blade as shown in Fig. 4. Hereby, the turbulent airflow and thus the drag outside the openings 5 can be optimised as compared to a flap.

Furthermore, the obstruction 6 can be formed partly as a duct or a vent pipe.

As shown in Figs. 1 and 2, the obstruction 6 partly constitutes a part of the side 4 of the cooling device 3, and in Fig. 3 and 4 the obstruction is positioned on an outside of the side of the cooling device.

In Fig. 2, the side 3 of the cooling device 4 has a length L and a width W, and the obstruction 6 has a extension which is the same as the width W of the side. However, the obstruction 6 may also have an extension different from the width W of the side 4 of the cooling device 3. In Figs. 3 and 4, the openings 5 has an overall opening extension along the width W of the side 4, and the obstruction 6 has an extension which is the same as the overall opening extension.

The obstruction 6 may be fastened by any means, such as by a mounting, screews, glue, straps, or the like.

Even though this has not been mentioned or shown explicitly, the side opposite the shown side 4 with openings 5 may also have openings and an obstruction in order to optimise the venting of air from within the wind turbine nacelle 1. Furthermore, the side 4 of the cooling device 3 having the openings 5 and the obstruction 6 may be the first face of the cooling device so that the obstruction is either part of the first face of the cooling device or positioned on top of the cooling device.

The obstruction 6 may be a plurality of separate obstrution parts, each mounted to create a drag outside an opening 5 in the side 4 of the cooling device 3.

The wind turbine nacelle 1 is shown having a cooling device 3 postioned on top of the nacelle. However, the cooling device 3 may also be positioned in a rear end of the nacelle 1 opposite the front face 7 so as to create a prolongment of the wind turbine nacelle. The function of the obstruction 6 will be the same; however, the inlet will be placed in the first face or one of the sides of the cooling device 3. In addtion, the inlet may be positioned in the front face 7 of the wind turbine nacelle 1.

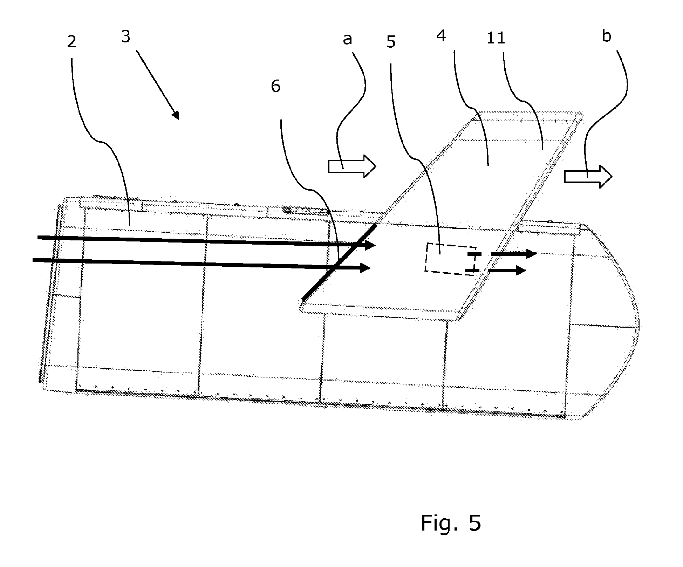

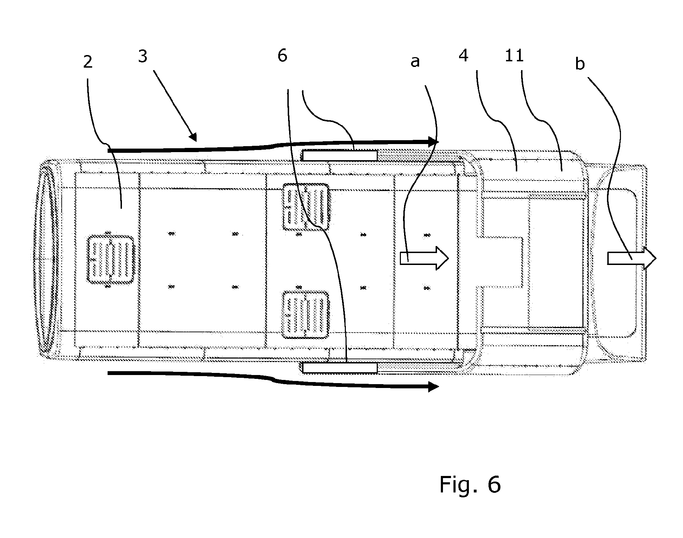

The cooling device may also have a cover 11 as shown in Figs. 5 and 6. The cover may enclose the cooling device as shown in Figs. 1-4. Alternatively, the cover may enclose the cooling area arranged on top of the wind turbine nacelle.

When enclosing a cooling area as shown in Figs. 5 and 6, the cover functions as the housing of the cooling device. The cover is fastened at the side of the wind turbine nacelle and extends upwards so that a space is created bewteen the outside of the nacelle and the inner face of the cover. As shown, the cover covers the opening in the nacelle. The cover is blocked at the front where the wind would enter the space, and the wind flowing along the side of the nacelle is thus forced to flow around the cover resulting in a turbulent flow at the back of the cover seen in relation to the wind direction. This is shown in Fig. 6. By creating turbulence, heated air comprised within the nacelle is forced out as shown in Fig. 5. Hereby, the cover and the block function as the obstruction 6 as shown in Fig. 6. The block may be part of the cover or the side of the nacelle.

When the cover encloses the cooling device so that an inner face of the cover together with the first face of the nacelle encloses the cooling devicea space is created between the outside of the cooling device and the inner face of the cover. When air flows through the space, the velocity of the air is increased, and the turbulence created by the obstruction is thus also increased.

A further advantage of enclosing the cooling device within the cover is thus that the cover may provide the wind turbine nacelle with a recognisable design, which may be used to identify the manufacturer of the wind turbine.

The cover may be fastened at the side face of the nacelle and extend somewhat perpendicular to the side face of the nacelle and then extend along the side face creating a space between the side face of the nacelle and the inner face of the cover. The side face of the nacelle may have an side opening outside the cover so that the cover covers the side opening. The space may be filled with sound insulation material in order to reduce the noise coming out of the side openings.

By having a cover, the openings are not visible from the outside of the wind turbine and the aestetic impression of the wind turbine is thus upheld.

By wind turbine is meant any kind of apparatus able to convert wind power into electricity such as a wind generator, wind power unit (WPU), or wind energy converter (WEC).

Although the invention has been described in the above in connection with preferred embodiments of the invention, it will be evident for a person skilled in the art that several modifications are conceivable without departing from the invention as defined by the following claims.

## Claims

1. Wind turbine nacelle having a front end at which rotor blades are arranged and a longitudinal extension, where wind flows from the front end along the longitudinal extension defining a wind direction, the nacelle comprising:
- a first face, and
- a cooling device comprising a cooling area and extending from the first face of the nacelle,
wherein the nacelle has at least one side with at least one opening for venting of air comprised within the nacelle, the side having a side length extending along the longitudinal extension of the nacelle and a side width, and wherein the nacelle further comprises an obstruction situated before the openings in relation to the wind direction in order to create a turbulent airflow outside the openings so that the nacelle is vented by dragging air out of the opening.

2. Wind turbine nacelle according to claim 1, wherein the first face is the side of the nacelle and the cooling device comprises a cover fastened to the nacelle, the cover extending perpendicular to the longitudinal extension of the nacelle and partly along the nacelle creating a space between the nacelle and the cover, and
wherein the obstruction is the cover arranged outside the at least one opening.

3. Wind turbine nacelle according to claim 2, wherein the cover has a front and the space is partly blocked at the front, thus blocking the wind from entering the space.

4. Wind turbine nacelle according to claim 1, wherein the at least on opening is arranged in a side of the cooling device.

5. Wind turbine nacelle according to claim 4, wherein the cooling device comprises a cooling area wherein the at least one opening is positioned after the cooling area in relation to the wind direction for venting of air comprised within the nacelle.

6. Wind turbine nacelle according to any of the preceding claims, wherein the opening has an extension substantially along the width of the side of the cooling device, and wherein the obstruction has an extension corresponding to the extension of the at least one opening along the width of the side so as to create a turbulent airflow along the whole extension of the at least one opening.

7. Wind turbine nacelle according to any of the preceding claims, wherein at least a part of the obstruction constitutes a part of the side of the cooling device and projects from the side at a first distance measured perpendicular to the side from the side to a peak point of the obstruction farthest away from the side.

8. Wind turbine nacelle according to any of the preceding claims, wherein the obstruction has a flap which is fastened to the side of the cooling device and projects out from the side of the cooling device.

9. Wind turbine nacelle according to any of the preceding claims, wherein the obstruction is shaped at least partly as a duct.

10. Wind turbine nacelle according to any of the preceding claims, wherein the side of the cooling device having the opening is a first face of the cooling device.

11. Wind turbine nacelle according to any of the preceding claims, wherein the side of the cooling device extends substantially perpendicular to the first face of the nacelle.

12. Wind turbine nacelle according to any one of claims 3-8, wherein the obstruction is positioned on the side of the cooling device so that a second distance from the peak point of obstruction to the opening corresponding to 1/2 of the length of the side of the cooling device, preferably 1/3 of the length of the side of the cooling device, more preferably 1/4 of the length of the side of the cooling device.

13. Wind turbine nacelle according to any of the preceding claims, further comprising a cover having at least one inner face, the cooling device being enclosed by the first face of the nacelle and the inner face of the cover.

14. Wind turbine nacelle according to any of the preceding claims, wherein the obstruction is a vent pipe in fluid connection with a certain area within the nacelle or a housing within the nacelle, e.g. the area directly around the generator.

15. Wind turbine comprising a wind turbine nacelle according to any of the preceding claims.
